# DEMANDE DE BREVET EUROPEEN

(11) **EP 1 712 851 A2**
(43) Date de publication de la demande: **18.10.2006**
(21) Numéro de dépôt: 06112484.8
(22) Date de dépôt: 11.04.2006
(51) Int. Cl.: F24H 8/00, F24H 9/00

(54) **Corps de chauffe polyvalent**

(30) Priorité: 11.04.2005 ES 200500840
(71) Demandeur: VERGARA URANGA, JOSE MARIA, 489050 ERANDIO-BIZKAIA (ES)
(72) Inventeur: Vergara Uranga, José Maria, 489050, ERANDIO-BIZKAIA (ES); Marín Marín, Ricardo, 01007, VITORIA-ALAVA (ES)
(74) Mandataire: Intes, Didier Gérard André

(57) **Abrégé**

Corps de chauffe polyvalent, qui comprend une chambre pré-brûleur (1) qui reçoit le mélange gaz-air d'une chambre de mélange (7) pourvue d'une entrée de gaz (8) et d'une entrée d'air (9), un ventilateur soufflant (6) qui insuffle de l'air dans la chambre de mélange (7), un brûleur poreux en fibres céramiques (2), une chambre de combustion (3), un échangeur de chaleur (4) muni d'une entrée d'eau froide (10) et d'une sortie d'eau chaude (11), et une chambre de sortie (5) des fumées résultantes de la combustion, la chambre pré-brûleur (1) comportant une paroi (12) faisant face au brûleur (2), cette paroi (12) s'étendant depuis son raccordement avec la chambre de mélange (7) jusqu'à son extrémité opposée avec un degré (13) de convergence adéquat avec le brûleur lui-même (2) qui est en un matériau poreux de fibres céramiques à très basse perte de charge, et comporte un agencement non homogène de perforations sur toute sa surface.

## Description

### DOMAINE DE L'INVENTION

Cette invention concerne un corps de chauffe destiné à équiper des chauffe-eau et des chaudières à gaz, du type de celles que l'on emploie dans des appareils et installations de chauffage et de chauffage d'eau et qui, par rapport au sens de circulation interne du flux gazeux entre l'entrée des composants de la combustion, air et gaz, et la sortie des fumées résultantes de celle-ci, ce corps de chauffe présente une structure générale qui comprend un ventilateur et une électrovanne à gaz qui insufflent respectivement l'air et le gaz dans la chambre de mélange, laquelle est pourvue d'une entrée d'air et d'une entrée de gaz, une chambre pré-brûleur qui distribue le mélange gaz-air sous le brûleur, un brûleur poreux en fibre céramique, une chambre de combustion, un échangeur de chaleur qui comporte une entrée d'eau froide et une sortie d'eau chaude, et un collecteur de sortie des fumées résultantes de la combustion.

En particulier, l'invention concerne un corps de chauffe conçu de sorte que, avec des modifications moindres, il pourra être adapté à l'emploi dans des chaudières sans condensation et dans des chaudières à condensation.

### ÉTAT DE LA TECHNIQUE ANTÉRIEURE

Dans le domaine on distingue deux types de chaudière : celles sans condensation et celles à condensation.

Les premières sont les plus classiques et, en rapport avec le corps de chauffe, leur structure se compose d'une chambre de combustion qui comporte un brûleur à branches au niveau de sa partie inférieure et un échangeur de chaleur au niveau de sa partie supérieure au-dessus de l'échangeur de chaleur se trouve le collecteur de fumées et un ventilateur d'aspiration des fumées, qui fait avancer celles-ci à travers la cheminée ; le brûleur reçoit le gaz à travers les injecteurs des branches et, l'air de combustion, à travers la dépression engendrée par le ventilateur. Comme son propre nom l'indique, le fonctionnement de ce type de chaudière implique que les fumées de la combustion ne soient pas refroidies en dessous de leur température de point de rosée et qu'elles sortent avec une chaleur résiduelle considérable. Pour ce type de chaudière, il est possible d'utiliser un échangeur similaire à un radiateur d'automobile qui est fabriqué en cuivre spécial et selon le procédé déposé Cupro-Braze ; ceci a été réalisé pour la première fois par le Titulaire lui-même de la présente invention, et a permis d'obtenir un échangeur qui reçoit les fumées de la flamme et transfère la chaleur de celles-ci vers un flux d'eau circulant à l'intérieur des tuyaux de l'échangeur. Cet échangeur résiste à des sauts de température aussi brusques que celui allant des 4° C de l'eau de l'intérieur jusqu'aux 750° C des fumées, et ceci en rendant compatible le rendement maximum dans toute la plage de puissances (c'est-à-dire, sans qu'il y ait de condensation des fumées et sans que l'eau bouille à l'intérieur des tuyaux du radiateur), et d'obtenir ces conditions dans un échangeur aussi petit et léger que possible.

Contrairement aux chaudières précitées, les chaudières à condensation sont conçues pour exploiter la chaleur résiduelle des fumées de la combustion en les refroidissant en dessous de leur point de rosée et en condensant la vapeur d'eau contenue dans celles-ci, ce qui procure un rendement calorifique bien au-dessus de celui desdites chaudières sans condensation. La structure du corps de chauffe est, dans ce cas, inverse à la précédente ; ici, le brûleur se trouve au niveau de la partie supérieure de la chambre de combustion ; l'échangeur de chaleur se trouve au niveau de la partie inférieure de celle-ci ; la chambre qui reçoit le mélange gaz-air se trouve au-dessus du brûleur, dans ce cas de prémélange, et est alimentée depuis une chambre de mélange dans laquelle l'air est poussé par un ventilateur soufflant ; et le collecteur de sortie des fumées se trouve en dessous de l'échangeur de chaleur.

Il ressort de ce qui précède que dans les chaudières sans condensation, la circulation des fumées a lieu selon la tendance ascendante naturelle, de sorte que le ventilateur requis est de faible puissance, alimenté en courant alternatif et économique ; par contre, dans les chaudières à condensation, la circulation des fumées se produit dans le sens contraire au sens naturel, et il est nécessaire que le ventilateur soufflant possède une puissance très supérieure et soit alimenté en courant continu, ce qui devient bien plus coûteux.

L'un des problèmes que l'on rencontre en général avec ce type de produit, ce sont les pertes de charge, qui se traduisent en une perte considérable de la puissance thermique maximum disponible. À cet égard, on constate qu'il est habituel de disposer, en amont du brûleur de prémélange, une sorte de filtre ou grille afin d'améliorer l'uniformité de la fourniture du mélange combustible gaz-air destiné au brûleur, afin que la distribution de la flamme produite soit également uniforme. Cette solution provoque une grande perte de charge, qui est très importante dans les chaudières sans condensation, et l'est moins, logiquement, dans les chaudières à condensation, dans lesquelles la puissance importante du ventilateur soufflant requis permet de compenser celle-ci, bien que cela implique toujours une perte d'efficacité énergétique. De ce fait, la recherche d'une solution à ce problème a son origine dans les chaudières sans condensation.

Un autre problème détecté dans ce type de produit est la production de bruits inacceptables. Des études et des tests menés à cet effet dans des laboratoires ont conduit à la conclusion que ceux-ci ne sont pas dus à des vibrations des parois métalliques, mais que ce bruit est d'une fréquence unique ainsi que toutes ses harmoniques, et qu'il résulte des instabilités de la flamme qui viennent s'accoupler à une certaine fréquence propre du volume des fumées dans la chambre de combustion ; sa basse fréquence permet d'écarter le fait que ce bruit puisse avoir son origine dans la résonance de la flamme elle-même.

### EXPLICATION ET AVANTAGES DE L'INVENTION

Compte tenu de cet état des choses, la présente invention propose un corps de chauffe polyvalent qui, en utilisant un brûleur de prémélange en fibres céramiques, peut servir tant pour des chaudières sans condensation que pour des chaudières à condensation. Le corps de chauffe comprend généralement les éléments indiqués dans le domaine de l'invention mentionné ci-dessus, et présente une structure dans laquelle ladite chambre pré-brûleur comporte une paroi faisant face au brûleur et cette paroi, depuis son raccordement avec la chambre de mélange jusqu'à son extrémité opposée, s'étend avec un angle de convergence adéquat par rapport au brûleur lui-même. Ledit brûleur, à très faible perte de charge, comporte un agencement non homogène de perforations sur toute sa surface. Il a été prouvé que la géométrie particulière de la chambre pré-brûleur a une efficacité importante pour assurer une distribution très homogène du mélange en amont du brûleur, une bonne distribution de la flamme et une réduction importante de la perte de charge. En plus d'employer un brûleur poreux et perforé, en fibres céramiques, à perte de charge réduite selon l'invention, l'agencement de perforations de ce brûleur ne s'étend pas de manière homogène sur toute sa surface, mais des zones perforées convenablement alternées avec d'autres zones poreuses n'étant pas perforées sont prévues ; ainsi, on arrive à obtenir que la hauteur de la flamme ne soit pas uniforme sur toute la surface du brûleur, mais qu'elle soit distribuée par zones, ce qui permet d'éliminer les bruits inacceptables dudit couplage entre la fréquence de la flamme et celle qui est due au volume des fumées dans la chambre de combustion.

Les solutions adoptées ont permis d'obtenir des pertes de charge aussi faibles que leur application à des chaudières à condensation permet l'emploi efficace de ventilateurs soufflants à courant alternatif et basse pression, très économiques (comme ceux qui sont employés pour les chaudières sans condensation) lorsqu'on les compare à ceux qui ont été précédemment mentionnés. Ceci rend possible l'énorme avantage consistant en ce que le même corps de chauffe est applicable aux deux types de chaudière, à condensation et sans condensation, juste en effectuant des changements aussi simples que de mettre en place l'échangeur adéquat à chaque cas et retourner l'appareil pour que, lorsqu'il s'agit d'une chaudière à condensation, l'eau condensée tombe par gravité.

Ces particularités de l'invention ainsi que d'autres sont illustrées dans la description détaillée qui suit, celle-ci se référant aux dessins annexés.

### DESSINS ET RÉFÉRENCES

Afin de mieux comprendre la nature de la présente invention, sur les dessins annexés on a représenté un mode de réalisation industrielle préféré, donné seulement à titre d'exemple illustratif et non limitatif.

La figure 1 est une vue en élévation latérale d'un corps de chauffe selon l'invention qui est appliqué à une chaudière sans condensation. Un détail est incorporé à cette figure qui montre la vue latérale gauche correspondant à la vue précédente.

La figure 2 est un agrandissement de l'étage supérieur de l'échangeur 4, qui correspond au détail II qui est entouré dans le détail incorporé à la figure 1.

La figure 3 est un agrandissement correspondant à la vue latérale gauche de l'échangeur 4, selon le détail III qui est entouré dans le détail incorporé à la figure 1 et qui est destiné à illustrer la partie coudée de l'entrée d'eau froide 10 de cet échangeur 4.

La figure 4 est une vue en plan correspondant à un mode de réalisation du matelas céramique poreux qui constitue le brûleur poreux en fibres céramiques 2 selon l'invention.

La figure 5 est une vue en élévation latérale d'un corps de chauffe selon l'invention qui est appliqué à une chaudière à condensation.

La figure 6 est une vue latérale droite correspondant à la figure 5.

À ces figures sont indiquées les références suivantes :
1.- Chambre pré-brûleur
2.- Brûleur poreux en fibres céramiques ou matelas céramique poreux
3.- Chambre de combustion
4.- Échangeur de chaleur
5.- Collecteur de sortie des fumées
6.- Ventilateur soufflant
7.- Chambre de mélange
8.- Entrée de gaz
9.- Entrée d'air
10.- Entrée d'eau froide
11.- Sortie d'eau chaude
12.- Paroi de chambre pré-brûleur (1)
13.- Angle de paroi (12)
14.- Bandes de perforations dans le brûleur de matelas céramique (2)
15.- Évacuation de l'eau condensée
16.- Cheminée des fumées

### EXPOSITION D'UN MODE DE RÉALISATION PRÉFÉRÉ

En rapport avec les figures et références indiquées ci-dessus, dans les plans annexés on a illustré un mode de réalisation préféré d'un corps de chauffe polyvalent, qui peut être employé pour des chaudières sans condensation et à condensation, lequel comporte un ensemble d'éléments comprenant, par rapport au sens de circulation interne du flux gazeux entre l'entrée du mélange combustible gaz-air et la sortie des fumées résultantes de la combustion, une chambre pré-brûleur 1 qui reçoit le mélange gaz-air d'une chambre de mélange 7 pourvue d'une entrée de gaz 8 et d'une entrée d'air 9, un ventilateur soufflant 6 qui insuffle l'air dans la chambre de mélange 7, un brûleur poreux en fibres céramiques 2, une chambre de combustion 3, un échangeur de chaleur 4 qui comporte une entrée d'eau froide 10 et une sortie d'eau chaude 11, et un collecteur de sortie des fumées 5 résultantes de la combustion.

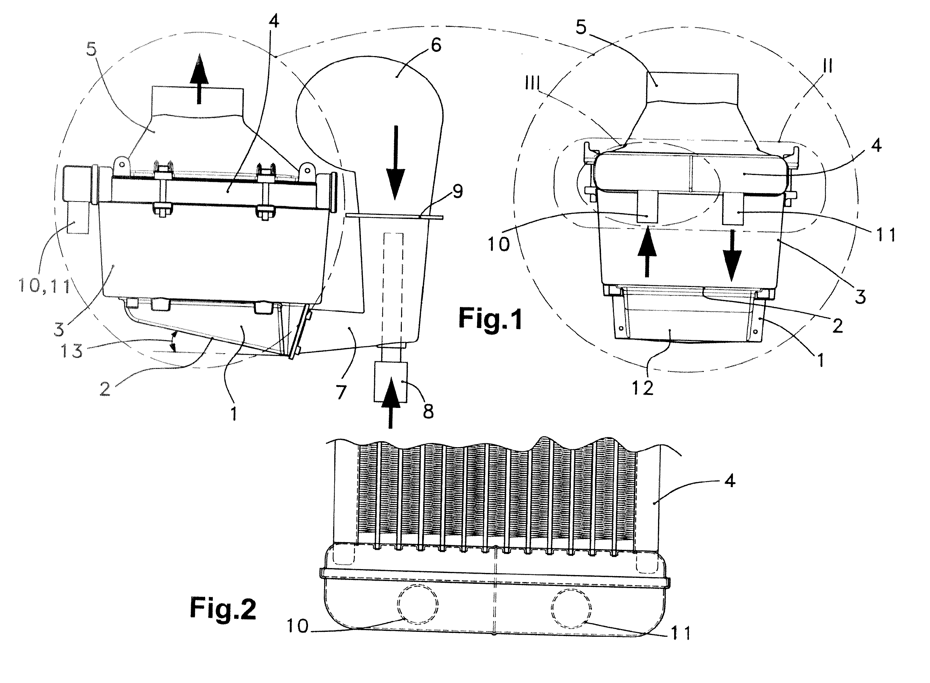

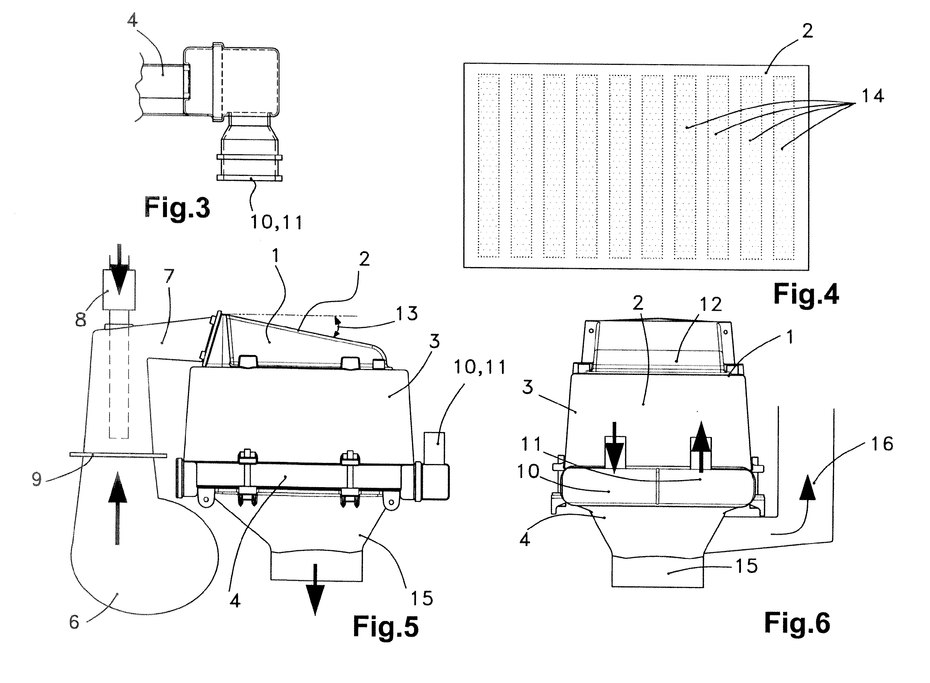

Conformément à l'invention, dans le corps de chauffe préconisé, ladite chambre pré-brûleur 1 comporte une paroi 12 faisant face au brûleur 2 et qui, depuis son raccordement avec la chambre de mélange 7 jusqu'à son extrémité opposée, cette paroi 12 s'étend avec un angle 13 de convergence adéquat avec le brûleur lui-même 2 ; et ledit brûleur 2, fait d'un matériau poreux de fibres céramiques à très basse perte de charge, comporte un agencement non homogène de perforations sur toute sa surface. Cette structure proposée est illustrée à la figure 1 pour une chaudière sans condensation et, selon ce qui a été mentionné précédemment, présente des pertes de charge aussi faibles que son extrapolation dans le cas d'une chaudière à condensation permet l'utilisation d'un ventilateur soufflant 6 à courant alternatif, basse pression et coût réduit ; il est possible, dans ce cas, d'employer fondamentalement les mêmes éléments que ceux qui intègrent le mode de réalisation de la figure 1, pour construire un mode de réalisation comme celui des figures 5 et 6, obtenu en retournant le mode de réalisation de la figure 1 et qui n'est autre que l'agencement d'un corps de chauffe propre à une chaudière à condensation. À cet égard, on notera que la même pièce que celle qui remplissait précédemment la fonction de sortie des fumées 5, à présent sert à l'évacuation de l'eau condensée 15, laquelle tombe par gravité ; il est juste nécessaire de raccorder à cette dernière pièce une cheminée 16 d'échappement des fumées ; il sera également nécessaire que l'échangeur 4 soit approprié pour ce type de chaudière. À l'aide de ces simples modifications, il devient possible que la chaudière sans condensation et celle à condensation utilisent fondamentalement le même corps de chauffe.

Conformément à un mode de réalisation préféré, ledit angle 13 formé par la paroi 12 avec le brûleur 2 possède une valeur comprise entre 8 et 20 degrés. C'est-à-dire que, conformément à l'invention, en vue de l'application du corps de chauffe à une chaudière sans condensation, la chambre pré-brûleur 1 est située en dessous du brûleur 2, le brûleur 2 se trouve dans la partie inférieure de la chambre de combustion 3, l'échangeur de chaleur 4 se trouve dans la partie supérieure de la chambre de combustion 3, la sortie des fumées 5 se trouve au-dessus de l'échangeur de chaleur 4, et la chambre de mélange 7 forme un coude qui comporte une ouverture inférieure de raccordement avec la chambre pré-brûleur 1 et une ouverture supérieure de raccordement avec le ventilateur soufflant 6 ; en revanche, dans son application à une chaudière à condensation, ladite chambre pré-brûleur 1 est située au-dessus du brûleur 2, le brûleur 2 se trouve dans la partie supérieure de la chambre de combustion 3, l'échangeur de chaleur 4 se trouve dans la partie inférieure de la chambre de combustion 3, en dessous de l'échangeur de chaleur 4 se trouve une évacuation de l'eau condensée 15 formée par la sortie des fumées 5, elle-même en position inversée de haut en bas correspondant à cette application du corps de chauffe à une chaudière sans condensation, la chambre de mélange 7 forme un coude qui comporte une ouverture supérieure de raccordement avec la chambre pré-brûleur 1 et une ouverture inférieure de raccordement avec le ventilateur soufflant 6 et, latéralement raccordée avec ladite sortie d'eau condensée 15, il existe une cheminée 16 d'évacuation des fumées de la combustion.

Comme il a été indiqué précédemment, afin de supprimer les bruits inacceptables qui se produisent lors de l'utilisation d'un brûleur poreux 2 à perte de charge faible et uniformité de flamme élevée du type de ceux qui sont choisis pour cette invention, conformément à l'invention, ledit brûleur 2 est un matelas céramique poreux rectangulaire ou carré qui comporte des perforations agencées selon des bandes 14 qui sont parallèles les unes aux autres et entourées de zones non perforées de ce matelas céramique poreux.

Ainsi, le fait d'avoir une flamme avec une fluence de combustible différente entre celui qui traverse lesdits pores et celui qui s'écoule à travers les perforations agencées de manière non homogène sur toute la surface, fait que l'ensemble du front de la flamme n'est pas plan (uniforme), mais présente des irrégularités entre des zones à faible flamme (celle des pores) et des zones à flamme élevée (celle des perforations), et cette irrégularité de la flamme évite la formation de fréquences qui viennent s'accoupler et produire des vibrations bruyantes.

Une solution préférée à ce propos est celle de la figure 4, dans laquelle les bandes perforées 14 sont parallèles à l'un quelconque des côtés dudit matelas céramique poreux. Une autre possibilité consiste en ce que les bandes perforées 14 soient obliques par rapport aux côtés dudit matelas céramique poreux.

Dans un autre ordre des choses, les figures 2 et 3 illustrent une solution de l'invention consistant en ce que ladite entrée d'eau froide 10 est mise en place au moyen d'un conduit vertical raccordé au niveau de l'une des faces majeures et horizontales de l'échangeur de chaleur 4. De cette manière, l'eau d'entrée vient heurter la paroi supérieure de l'échangeur 4 et s'ouvre en forme d'éventail, faisant en sorte que la différence des débits entre le tuyau le plus favorisé et le plus préjudicié (des multiples tuyaux qui intègrent l'échangeur) soit de l'ordre de 7%, tandis que toute autre configuration quelconque suppose des différences très prononcées qui risquent de produire une ébullition inacceptable de l'eau dans les tuyaux à plus faible débit.

## Revendications

1. Corps de chauffe polyvalent comprenant, par rapport au sens de circulation interne du flux gazeux entre l'entrée du mélange combustible gaz-air et la sortie des fumées résultantes de la combustion, une chambre pré-brûleur (1) qui reçoit le mélange gaz-air d'une chambre de mélange (7) pourvue d'une entrée de gaz (8) et d'une entrée d'air (9), un ventilateur soufflant (6) qui insuffle l'air dans la chambre de mélange (7), un brûleur poreux en fibres céramiques (2), une chambre de combustion (3), un échangeur de chaleur (4) qui comporte une entrée d'eau froide (10) et une sortie d'eau chaude (11), et une chambre de sortie des fumées (5) résultantes de la combustion, **caractérisé en ce que** ladite chambre pré-brûleur (1) comporte une paroi (12) faisant face au brûleur (2) et qui, depuis son raccordement avec la chambre de mélange (7) jusqu'à son extrémité opposée, s'étend avec un degré (13) de convergence adéquat avec le brûleur (2) ; et **en ce que** ledit brûleur (2), fait d'un matériau poreux de fibres céramiques à très basse perte de charge, comporte un agencement non homogène de perforations sur toute sa surface.

2. Corps de chauffe polyvalent selon la revendication 1, **caractérisé en ce que** ledit angle (13) formé par la paroi (12) avec le brûleur (2) possède une valeur comprise entre 8 et 20 degrés.

3. Corps de chauffe polyvalent selon les revendications précédentes, **caractérisé en ce que** ledit brûleur (2) est un matelas céramique poreux et perforé, rectangulaire ou carré, qui présente ses perforations agencées selon des bandes (14) qui sont parallèles les unes aux autres et entourées par des zones non perforées de ce matelas céramique poreux.

4. Corps de chauffe polyvalent selon la revendication 3, **caractérisé en ce que** les bandes perforées (14) sont parallèles à l'un quelconque des côtés dudit matelas céramique poreux.

5. Corps de chauffe polyvalent selon la revendication 3, **caractérisé en ce que** les bandes perforées (14) sont obliques par rapport aux côtés dudit matelas céramique poreux.

6. Corps de chauffe polyvalent selon la revendication 1, **caractérisé en ce que** l'entrée d'eau froide (10) est mise en place au moyen d'un conduit vertical raccordé au niveau de l'une des faces majeures et horizontales de l'échangeur de chaleur (4).

7. Corps de chauffe polyvalent selon les revendications précédentes, **caractérisé en ce que**, dans son application à une chaudière sans condensation, la chambre pré-brûleur (1) est située en dessous du brûleur (2), le brûleur (2) se trouve dans la partie inférieure de la chambre de combustion (3), l'échangeur de chaleur (4) se trouve dans la partie supérieure de la chambre de combustion (3) , la sortie des fumées (5) se trouve au-dessus de l'échangeur de chaleur (4) , et la chambre de mélange (7) forme un coude qui comporte une ouverture inférieure de raccordement avec la chambre pré-brûleur (1) et une ouverture supérieure de raccordement avec le ventilateur soufflant (6).

8. Corps de chauffe polyvalent selon les revendications 1 à 6, **caractérisé en ce que**, dans son application à une chaudière à condensation, ladite chambre pré-brûleur (1) est située au-dessus du brûleur (2), le brûleur (2) se trouve dans la partie supérieure de la chambre de combustion (3), l'échangeur de chaleur (4) se trouve dans la partie inférieure de la chambre de combustion (3), en dessous de l'échangeur de chaleur (4) se trouve une évacuation de l'eau condensée (15) formée selon la position inversée de haut en bas de la sortie des fumées (5) elle-même, correspondant à l'application du corps de chauffe à une chaudière sans condensation, la chambre de mélange (7) forme un coude qui comporte une ouverture supérieure de raccordement avec la chambre pré-brûleur (1) et une ouverture inférieure de raccordement avec le ventilateur soufflant (6) et, latéralement raccordée avec l'évacuation de l'eau condensée (15), il existe une cheminée (16) d'évacuation des fumées de la combustion.
